Europäisches Patentamt

European Patent Office

Office européen des brevets

(11) Publication number: **0 177 998**
A1

(12) # EUROPEAN PATENT APPLICATION

(21) Application number: 85201430.7

(22) Date of filing: 10.09.85

(51) Int. Cl.⁴: **B 01 D 47/06,** B 01 D 47/12

(30) Priority: **12.09.84 NL 8402782**

(43) Date of publication of application: **16.04.86**
**Bulletin 86/16**

(84) Designated Contracting States: **AT BE DE FR GB IT NL SE**

(71) Applicant: **STAMICARBON B.V., Mijnweg 1, NL-6167 AC Geleen (NL)**

(72) Inventor: **Nommensen, Johan Paul, Urnenveldstraat 9, NL-6171 BM Stein (L.) (NL)**

(74) Representative: **Roeffen, Wilhelmus Johannes Maria et al, OCTROOIBUREAU DSM Postbus 9, NL-6160 MA Geleen (NL)**

(54) Process for removing particles from a gaseous medium.

(57) The invention relates to a process for removing gaseous, solid and/or liquid particles from a gaseous medium, use being made of an auxiliary medium, wherein a first particulate auxiliary medium, 90% (m/m) of which has a size between 50 and 5000 micrometers, is introduced into a first zone of the gaseous medium and into a second zone of the gaseous medium a second auxiliary medium is introduced, of which 90% (m/m) has a size between 0 and 100 micrometers and such properties as to result in interaction between these particles and those of the first auxiliary medium.

The process according to the invention is particularly suitable to remove small and very small particles, i.e. having dimensions on the order of magnitude of microns, from gaseous large volume flows, i.e. of 50000-100000 m³/h and more, such as occur, for instance, in prilling towers and driers in the chemical industry.

WdW/JL/WP/ag/mjh

STAMICARBON B.V. (Licensing subsidiary of DSM)

-1-                                    AE 3571

## PROCESS FOR REMOVING PARTICLES FROM A GASEOUS MEDIUM

The invention relates to a process for removing gaseous, solid and/or liquid particles from a gaseous medium, use being made of an auxiliary medium.

More in particular the invention relates to a process by which small and very small particles, i.e. having dimensions on the order of magnitude of microns, can be separated from a gaseous medium; and its particularly suitable for removing particles from large volume flows, i.e. of 50,000-100,000 $m^3/h$ and more, such as occur, for instance, in prilling towers and driers in the chemical industry.

A process as meant in the preamble is known from British patent specification 1521859. In the known process a wash liquid is sprayed in the gas, following which the gas is divided into partial flows by means of a device consisting of a number of profiled bars, after which these partial flows are reunited, which is attended by a collision effect.

The disadvantage of said process is that by effecting a division into partial flows and by making these collide, large differences in velocity are created, as a result of which relatively high dynamic friction losses arise, and this results in a proportional pressure drop. This implies that relatively much energy is needed for the known process.

Also known are processes and devices in which the gas to be purified is passed through one or more filter cloths or bags. For these processes and devices, too, it is true that there is a relatively large resistance across the filter cloths or bags, so that relatively much energy is needed to purify the gas, while there also is a risk of clogging.

The object of the invention is to provide a process for removing particles from a gaseous medium in which there is a relatively low pressure drop and in which in particular smaller particles are effectively removed.

The process according to the invention is characterized in that a first particulate auxiliary medium, 90 % (m/m) of which has a size between 50 and 5000 micrometers, is introduced into a first zone of the gaseous medium and into a second zone of the gaseous medium a second auxiliary medium is introduced, of which 90 % (m/m) has a size between 0 and 100 micrometers and such properties as to result in interaction between these particles and those of the first auxiliary medium.

The presence of two interacting media, i.e. media between which there is mechanical, physical or chemical interaction, is essential to the invention. This does not mean to say that these auxiliary media must of necessity be compatible. An auxiliary medium in this context should be understood to mean also a substance already present in the gaseous medium, which is utilized as auxiliary medium in combination with the second auxiliary medium. Interaction is understood to mean that the nature of the properties of necessity results in the occurrence of a physical or chemical change in the state of the particles of one or both auxiliary media, but also, for instance, the influence exerted by an electrostatic field. An example of physical interaction of the particles of both auxiliary media is e.g. condensation of the second auxiliary medium on or near particles of the first auxiliary medium. Another example is dissolution of particles of the second auxiliary medium in those of the first one. Another example is a chemical reaction between particles of both auxiliary media. Yet another example of interaction is electrostatic charging of particles of one of the auxiliary media, so that they will combine as much as possible with those of the other medium. Interaction may also arise because of adhesive or cohesive forces between the particles of both auxiliary media.

The first auxiliary medium may be a liquid, but also a solid. By preference a liquid is introduced that is compatible with the particles to be removed. In some cases water will suffice, optionally after addition of an additive. Said additive will need to have such properties as to reinforce the interaction between the particles to be removed and those of the first auxiliary medium. It may, for instance, be considered to add an acid to the first auxiliary medium, for instance water, for the removal·of , for instance, ammonia from the gaseous medium.

As second auxiliary medium by preference a vapour capable of condensation at the pressure and temperature obtaining in the second zone or a very finely atomized liquid is applied. If a solid is introduced a first auxiliary medium in the first zone, for instance a powdered plastic, and a vapour in the second zone, the interaction between the particles of the second and the first auxiliary media may consist in condensation of the vapour on or near the particles of the first auxiliary medium, provided of course the temperature of the particles of the first auxiliary medium is lower than the condensation temperature of the second auxiliary medium.

With the process according to the invention, particularly the removal from the gaseous medium of small particles in the gaseous medium to be purified, i.e. particles having a size smaller than 10 microns, is significantly improved compared with the situation in which there is no interaction between the particles of the auxiliary media. This will be illustrated on the basis of examples and a comparative example.

It is noted that devices for the purification of gaseous media that purify the gas in two zones, or stages, are known per se. An example of such a process is known from Fortschritt Berichte der VDI-Zeitschriften, Reihe 3 nr. 33 of November 1970, page 36 ff. In this process an injector or venturi tube is used to mix a liquid with the gas to be purified. From Figure 27 of said publication, page 55, it appears that the energy consumption is very high, i.e. on the order of magnitude of 5 times the energy consumption achieved when applying the invention.

An embodiment of the process according to the invention is characterized in that both in the first and in the second zone the respective auxiliary media are introduced locally, such that the average mass distribution of the auxiliary media per volume unit of

-4-

the gaseous medium in each zone is independent of the place of introduction. Thus the amounts of auxiliary media to be introduced are utilized as effectively, and consequently as economically, as possible for the purpose for which they are meant. Not only the place of introduction is taken into account, for instance the radius in a cylindrical tube through which the medium to be purified flows, but also the local velocity of the medium and the particle concentration, which depends on the particle dimensions.

Another embodiment of the process according to the invention is characterized in that both in the first and in the second zone the velocity resultant of the introduced auxiliary media locally lies in approximately the same direction as the local velocity of the gaseous medium. Thus, the transfer of the impulse of the introduced auxiliary media to the gaseous medium to be purified is maximized. As a result, energy is saved, and in some cases it even is possible to transport the medium to be purified through the device in question without using an auxiliary device (fan).

Yet another embodiment of the process according to the invention is characterized in that the average initial velocity of the particles of the introduced auxiliary media relative to the gaseous medium is at least 30 m/s. This ensures efficient and consequently economic purification of the gaseous medium. This must probably be attribued to collision effects of the auxiliary media with the particles in the gaseous medium. In addition, use of a separate device for transporting the gas to be purified through the device can thus be made superfluous.

Yet another embodiment of the process according to the invention is characterized in that the gaseous medium between the first and the second zone is accelerated to at least 3 times the local velocity of the auxiliary medium introduced. On account of the increase in velocity of the gaseous medium, an improvement of the removal of particularly the coarser particles, i.e. particles having a size larger than 10 microns, is achieved. This velocity increase can be effected by, for instance, passing the gaseous medium through or between one or a number of profiled bodies. This does increase the pressure drop, but this disadvantage may be offset by an increased particle collection efficiency.

-5-

Yet another embodiment of the process according to the invention is characterized in that the gaseous medium undergoes at least one change of direction by at least 45 ° and at most 180 ° between the first and the second zone. This ensures that particularly the coarser particles, as stated above, in the gaseous medium and the coarser particles of the first auxiliary medium can, owing to their inertia, not entirely follow the change of direction and will impinge on the device causing the change of direction. This way, it is, therefore, also achieved that a portion of the particles to be removed is separated from the gaseous medium.

For sufficient interaction between the particles of both auxiliary media, it is desirable for the particles to be removed to remain at least 0.1 second in the first and/or the second zone.

In an embodiment of the process according to the invention the first auxiliary medium is introduced upstream of the place at which the second auxiliary medium is introduced. This ensures that the coarsest of the particles to be removed are removed by collision effects with the particles of the first auxiliary medium, so that in the second zone the desired interaction between the particles of both auxiliary media is hardly or not influenced by the presence of coarse particles.

An embodiment of the process according to the invention is characterized in that said first zone comprises two subzones, in the first subzone, seen in the direction of flow of the gaseous medium, a liquid being introduced with a velocity resultant in a direction approximately opposite to that of the gaseous medium, and in the second subzone a liquid with a velocity resultant in the direction of the gaseous medium, the velocity resultant of the liquid in the second subzone being larger than that of the liquid in the first subzone. This embodiment is of special advantage if the gaseous medium to be purified contains a relatively high proportion of coarser particles that are soluble in the liquid introduced. By introducing the liquid into the first subzone in a direction opposite to that of the gaseous

-6-

medium, the difference in the velocity between the particles in the gaseous medium and the liquid particles is maximized, so that a particle's chance of a collision with a liquid particle, and consequently of removal, is as high as possible. By introducing a liquid into the second subzone in the direction of flow of the gaseous medium, the velocity of the gas is maintained as good as can be by impulse transfer.

An embodiment of the process according to the invention is characterized in that the first and the second zone partly overlap. This embodiment is of advantage if a substance already present in the gaseous medium is used as auxiliary medium.

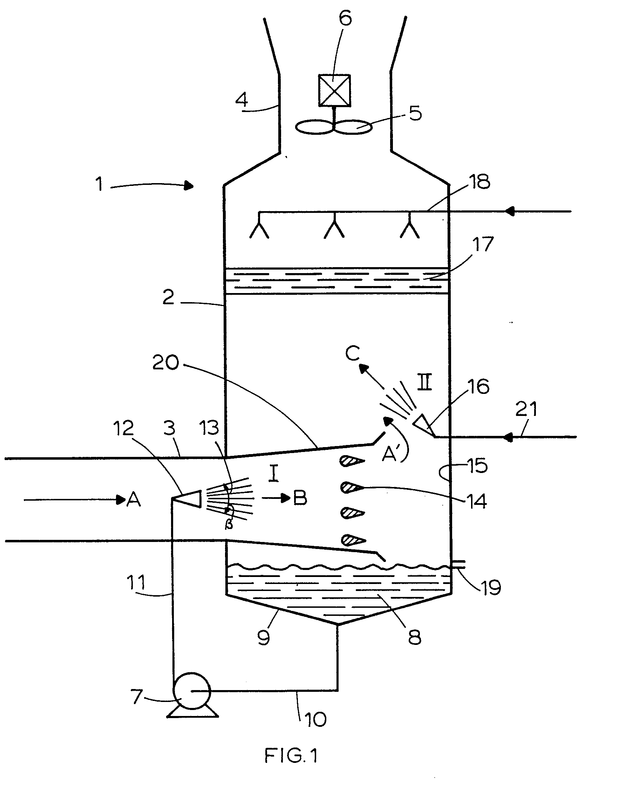

The invention will be elucidated with reference to the diagram according to Figure 1, without of course being restricted thereto. For the sake of clarity, only the major parts are indicated of a device in which the invention is applied.

In Fig. 1, 1 represents a washing device, the Roman figures I and II standing for a first zone and a second zone, respectively. It is noted that I and II do not indicate a certain sequence of introducing the auxiliary media into the gaseous medium.

The direction of flow of the gaseous medium supplied is indicated by arrow A.

2 is the jacket of the device, 3 the feed tube for the medium to be purified and 4 the discharge tube for the purified gaseous medium, 5 is a fan for transporting the gaseous medium through the device, and 6 a drive unit for this fan. 20 is the part of feed tube 3 that is within jacket 2.

7 is a device for recirculation of the auxiliary medium introduced into the first zone. By way of example, for the first auxiliary medium a liquid 8 has been selected, the particles to be removed in the example being well soluble therein.

Depending on the properties of the particles to be removed, which may be gaseous, solid and/or liquid, however, other auxiliary media may also be applied. Examples are: a granular or powdered plastic, a granular or powdered, porous, for instance sintered, material that is absorbing per se, such as porous carbon, thin and relatively (vs.

their width) long fibres that may have a 'hairy' surface, and iron particles, which have as an advantage that they can easily be leaded and also separated by means of a magnetic field. Naturally, device 7 and also suction line 10, delivery line 11 and spraying device 12 are to be adapted to the specific properties of the auxiliary medium applied.

From bottom part 9 of washing device 1 liquid 8 is aspirated by device 7 (pump) through line 10 and delivered through line 11 to device 12, which introduces it into the gaseous medium in the direction of arrow B.

In the present case, device 12 is a spray nozzle or consists of a number of spray nozzles. For clarity's sake only one has been depicted diagrammatically. The support of device 12 has not been drawn.

The spray nozzles are to be arranged such that the auxiliary medium introduced is fed uniformly over the cross section of feed tube 3, taking into account any differences in velocity over the cross section of the feed tube and the concentration differences of the substances to be removed from the gaseous medium. Suitable spray nozzles are one- or two-phase spray nozzles of the hollow cone or full-cone spray nozzle type.

Between first zone I and second zone II there is a device 14, in which the velocity of the gaseous medium is accelerated to a velocity at least threefold the local velocity of the auxiliary medium. By preference device 14 consists of profiled bars that are streamlined in the direction of flow of the gaseous medium so as to minimize the pressure drop across the device. At 15 the gaseous medium, and the particles in it, impinges on the wall of device 1. As a result, the velocity direction of the gaseous medium is deflected in the direction of arrow 'A'. This change in the direction of the gaseous medium can, of course, also be effected in another way, for instance by a strip-like or plate-like body, moveable or not. Functionally, the condition should preferably be met that there is an impingement effect between the particles to be removed and the said device, so that the particles separate from the gaseous medium. This separation can be promoted by irrigating said device with a substance exerting adhesive or cohesive forces upon the particles to be removed from the gaseous medium. Said device may also, for instance, exert electromagnetic or electrostatic forces on the particles to be removed. It should be noted that the first auxiliary medium must not be separated already in its entirety at said location.

Through line 21 a second auxiliary medium is supplied, which is introduced into the gaseous medium by means of device 16. It is essential that there is chemical or physical interaction between this auxiliary medium and the particles of the first auxiliary medium or with the particles to be removed. Said second auxiliary medium may, for instance, consist in a condensable vapour, for instance steam, or a substance having chemical affinity for the first auxiliary medium, such as ammonia gas in combination with an acified liquid as first auxiliary medium. In the second zone, in particular the small particles, i.e. particles smaller than 3 microns, are united to form larger particles, or they are united with a relatively large particle from the first zone. By preference the second auxiliary medium is introduced in a direction that is about the same as the local direction of the gaseous medium, i.e. in the direction of arrow C.

In Fig. 1 a demister 17 known per se is indicated. Between the second zone and the demister, in the example according to the diagram in Figure 1 the gas has only a low velocity. The particles in the gas can separate in this area by gravity-induced settling, upon which they collect in bottom part 9 of washing device 1. Separation in said area can, by the way, be promoted by introducing the second auxiliary medium somewhat tangentially, so that the gaseous medium is made to rotate. Demister 17 serves to collect any liquid or solid particles still present in the gaseous medium. Suitable demisters are those operating on the basis of the labyrinth effect, so that the pressure loss is minimal. By means of device 18 a liquid is sprayed onto the demister, improving the collection efficiency of the latter.

By means of discharge nozzle 19 the level of liquid 8 in bottom part 9 of washing device 1 is kept constant.

Table 1 gives some relevant process variables for the diagram according to Figure 1 as well as two examples and a comparative example.

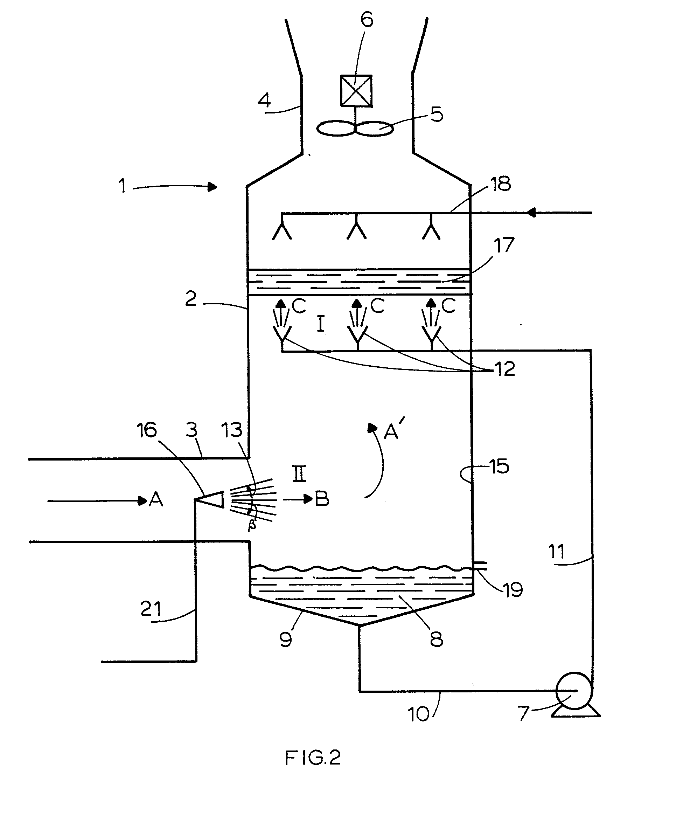

Table 2 presents some relevant process variables for the diagram of Fig. 2. In addition, three pertinent examples are given.

## TABLE 1

Data on the gaseous medium and the particles contained in it.

| | | |
|---|---|---|
| Volume flow | : | 1000 m$^3$/h |
| Pressure | : | atmospheric |
| Temperature | : | approx. 40°C |
| Relative humidity | : | approx. 70 % |
| Particles | : | urea dust |
| Particle concentration (in feed tube) | : | 250 mg/m$^3$ |
| Particle size distribution | : | 100 % (m/m) < 100 μm |
| | : | 90 % (m/m) < 10 μm |
| | : | 75 % (m/m) < 5 μm |
| | : | 50 % (m/m) < 1 μm |
| | : | 5 % (m/m) < 0.5 μm |
| Gas velocity, feed tube | : | 10 m/s |
| Gas velocity, device 14 | : | 50 m/s |
| Gas velocity, before demister | : | 2 m/s |
| Total pressure drop across washing device | : | approx. 1500 N/m$^2$ |
| Energy consumption | : | approx. 1.4 kWh/1000 m$^3$ |

EXAMPLES

|  | example 1 | example 2 | comp. example 1 | comp. example 2 |
|---|---|---|---|---|
| Aux. medium, zone I | 20 % (m/m) urea sol. | 20 % (m/m) urea sol. + 1% (m/m) H₂SO₄ | 20 % (m/m) urea sol. | 20 % (m/m) urea sol. |
| - amount | 1 m³/h | 1 m³/h | 1 m³/h | 2 m³/h |
| - temperature | 20-40°C | 20-40°C | 20-40°C | 20-40°C |
| Aux. medium, zone II | steam | NH₃ (vapour) | 20 %(m/m) urea sol. | - |
| - amount | 1 kg/h | 0.2 kg/h | 1 m³/h | - |
| - pressure | 2 bar | 12 bar | - | - |
| - temperature | 120°C | 5°C | 40-60°C | - |
| - collection eff. | 55 % | 60 % | 50 % | 50 % |

The collection efficiency is calculated on the basis of the particle concentration measured at the location of the discharge tube. The spray nozzles used for the auxiliary medium in zone I were commercially available so-called full-cone nozzles, producing droplets in the range of 100-500 μm. The spray nozzles used for introduction of the auxiliary media in zone II in Examples 1 and 2 were of the "Laval" nozzle type, those in example 3 of the full-cone nozzle type referred to above.

Measurements have also been made on a washing device in which the part of feed tube 3 that continues into the washing device (part 20) and device 14 had been removed and introduction device 12 had been installed below the demister. In this case ammonia vapour was introduced into zone II and an acified liquid into zone I. This situation is shown in Fig. 2.

-11-

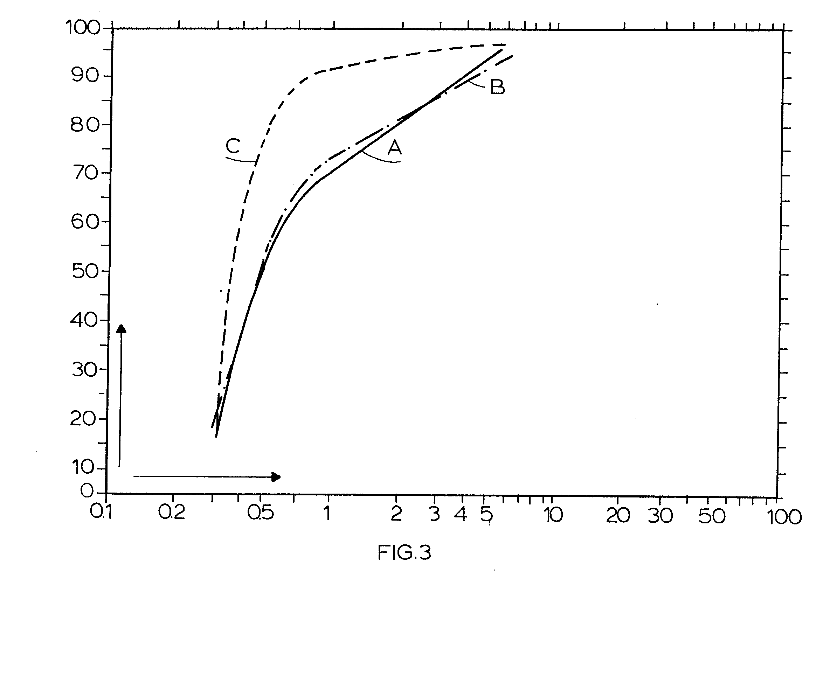

Table 2 gives some relevant process variables for the diagram as per Fig. 2. In addition, three examples have been included. The dimensions of the particles to be removed from the gaseous medium and of the removed particles are given in the graph of Fig. 3.

In Fig. 3 on the abscissa the particle size in micrometers is plotted and on the ordinate the particle size distribution expressed in % (m/m) < .... micrometers. A and B represent the particle-size distribution of the feed material in Examples 3 and 4 and in Example 5, respectively. C stands for the particle-size distribution at the location of the discharge tube, which was measured in all of the Examples 3-5.

## TABLE 2

Data on the gaseous medium and the particles present in it.

| | |
|---|---|
| Volume flow | : 1000 $m^3$/h |
| Pressure | : atmospheric |
| Temperature | : approx. 30°C |
| Relative humidity | : 40 % |
| Particles | : urea dust |
| Particle concentration | : 250 mg/m3 |
| Particle-size distribution | : see Fig. 3 |
| Energy consumption | : 1.2 kWh/1000 $m^3$ |

| | Example 3 | Example 4 | Example 5 |
|---|---|---|---|
| Aux. medium, zone II | Ammonia | Ammonia | Ammonia |
| amount fed | 250 ppm | 250 ppm | 250 ppm |
| Aux. medium, zone I | 20 % (m/m) urea solution | 20 % (m/m) urea solution + 0.7 % (m/m) $H_2SO_4$ | 20 % (m/m) urea solution + 1.0 % (m/m) $H_2SO_4$ |
| amount fed | 1 m3/h | 1 m3/h | 1 m3/h |
| collection efficiency | 50 % | 52 % | 55 % |

CLAIMS

1. Process for removing gaseous, solid and/or liquid particles from a gaseous medium, use being made of an auxiliary medium, characterized in that a first particulate auxiliary medium, 90 % (m/m) of which has a size between 50 and 5000 micrometers, is introduced into a first zone of the gaseous medium and into a second zone of the gaseous medium a second particulate auxiliary medium is introduced, of which 90 % (m/m) has a size between 0 and 100 micrometers and such properties as to result in interaction between these particles and those of the first auxiliary medium.

2. Process according to claim 1, characterized in that in both the first and the second zone the respective auxiliary media are introduced locally, such that the average mass distribution of the auxiliary media per volume unit of the gaseous medium in each zone is independent of the place of introduction.

3. Process according to either of claims 1-2, characterized in that both in the first and in the second zone the velocity resultant of the introduced auxiliary media locally lies in about the same direction as the local velocity of the gaseous medium.

4. Process according to any one of claims 1-3, characterized in that the average initial velocity of the particles of the introduced auxiliary media relative to the gaseous medium is at least 30 m/s.

5. Process according to any one of claims 1-4, characterized in that between the first and the second zone the gaseous medium is accelerated to a velocity that is at least threefold the local velocity of the introduced auxiliary medium.

6. Process according to any one of claims 1-5, characterized in that the gaseous medium undergoes at least one change of direction by at least 45° and at most 180° between the first and the second zone.

7. Process according to any one of claims 1-6, characterized in that the residence time in the first and in the second zone of a particle to be removed from the gaseous medium totals at least 0.1 s.

8. Process according to any one of claims 1-7, characterized in that the first auxiliary medium is introduced upstream of the place of introduction of the second auxiliary medium.

9. Process according to any one of claims 1-8, characterized in that said first zone comprises two subzones, in the first subzone, seen in the direction of flow of the gaseous medium, a liquid being introduced into the gaseous medium with a velocity resultant in a direction approximately opposite to that of the gaseous medium and in the second subzone a liquid with a velocity resultant in the direction of the gaseous medium, the velocity resultant of the liquid in the second subzone being larger than that of the liquid in the first subzone.

10. Process according to any one of claims 1-9, characterized in that the first and the second zone partly overlap.

1/3

FIG.1

0177998

FIG.2

FIG.3

European Patent
Office

**EUROPEAN SEARCH REPORT**

Application number

EP 85 20 1430

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (Int. Cl.4) |
| A | GB-A-1 508 135  (TURNER LISLE LTD.) <br> * Page 2, lines 13-99; figure 2 * <br><br> --- | 1,2,5, 6,8 | B 01 D  47/06 <br> B 01 D  47/12 |
| A | US-A-3 971 642  (MANUEL PEREZ) <br><br> *  Figure  1; column 2, line 66 - column 5, line 66 * <br><br> --- | 1,2,6- 8 | |
| A | US-A-4 247 308  (SEYMOUR CALVERT) <br><br> --- | | |
| A | US-A-3 856 487  (M. PEREZ) <br><br> ----- | | |
| | | | TECHNICAL FIELDS SEARCHED (Int. Cl.4) <br><br> B 01 D  47/00 |

The present search report has been drawn up for all claims

| Place of search | Date of completion of the search | Examiner |
|---|---|---|
| THE HAGUE | 13-12-1985 | BOGAERTS M.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82